# EUROPEAN PATENT APPLICATION

(11) **EP 2 546 479 A1**
(43) Date of publication of application: **16.01.2013**
(21) Application number: 10847466.9
(22) Date of filing: 11.03.2010
(51) Int. Cl.: F01L 1/08, F01L 13/00

(54) **VALVE DRIVE DEVICE FOR INTERNAL COMBUSTION ENGINE**

(71) Applicant: Toyota Jidosha Kabushiki Kaisha, Toyota-shi, Aichi 471-8571 (JP)
(72) Inventor: KAMIYAMA, Eiichi, Toyota-shi Aichi 471-8571 (JP); TATENO, Manabu, Toyota-shi Aichi 471-8571 (JP); HISAMINATO, Naoto, Toyota-shi Aichi 471-8571 (JP)
(74) Representative: Winter, Brandl, Fürniss, Hübner, Röss, Kaiser, Polte - Partnerschaft
(86) International application number: PCT/JP2010/054620
(87) International publication number: WO 2011/111236

(57) **Abstract**

A valve drive system of internal combustion engine which operates at a high compression ratio cycle, which is provided with an intake cam 52a and intake cam 52b for operating intake valves 7a, 7b and a variable valve timing device 70 which can offset the operating timings of the intake valves 7a, 7b by the intake cam 52a and the operating timings of the intake valves 7a, 7b by the intake cam 52b from each other. The intake cam 52a and intake cam 52b include circular parts and cam noses. At least one of the cam nose of the intake cam 52a and cam nose of the intake cam 52b has a concentric circular part which is formed in a circular shape concentric with the circular part.

## Description

### Technical Field

The present invention relates to a valve drive system of an internal combustion engine.

### Background Art

In the prior art, there is known an internal combustion engine which increases the expansion ratio at the time the fuel burns and expands compared with the actual compression ratio at the time of compression of the mixture of fuel and air. In this internal combustion engine, it is possible to suppress the abnormal combustion which occurs if the compression ratio is high while improving the heat efficiency. For example, it is known that if shifting the timing for closing an intake valve by a predetermined amount after a piston reaches bottom dead center, the actual compression ratio when compressing the air-fuel mixture at the inside of a cylinder becomes smaller.

Japanese Patent Publication No. 2004-183510 A1 relates to a high expansion ratio cycle engine which is provided with a supercharger and which sets the expansion ratio larger compared with the compression ratio and discloses to control an operation of a variable valve timing mechanism so as to advance an opening timing of an exhaust valve and increase the exhaust blowdown energy when it is judged that the engine is operating at a low-medium speed and low load region and the engine is in an acceleration transition state.

Japanese Patent Publication No. 6-33714 A1 discloses a valve drive structure with a variable valve timing mechanism which is provided with an intake valve or exhaust valve which is provided in an engine, a low speed-use cam, a high speed-use cam, a main rocker arm which can be driven by the low speed-use cam and which drives the valve, and a sub rocker arm which is driven by the high speed-use cam. It discloses that this valve drive structure is provided with a mode switching means which switches between a non-coupled mode where the sub rocker arm is not coupled with the main rocker arm and a coupled mode where it is coupled.

Japanese Patent Publication No. 2008-14191 A1 discloses a variable valve drive system which can continuously change opening characteristics of a valve, which variable valve drive system is provided with an input arm which receives input of a drive cam from a rocking cam arm and a transmission arm which transfers the input of the drive cam which is received from the input arm to the valve and is provided with a cam coupling mechanism as a switching means for executing and stopping a lift operation of a valve.

### Citation List

### Patent Literature

PLT 1: Japanese Patent Publication No. 2004-183510 Al
PLT 2: Japanese Patent Publication No. 6-33714 Al
PLT 3: Japanese Patent Publication No. 2008-14191 Al

### Summary of Invention

### Technical Problem

In the valve drive structure which is disclosed in the above Japanese Patent Publication No. 6-33714 A1, the low speed-use cam has a cam profile which gives an operating timing of the valve corresponding to low speed operation, the high speed-use cam has a cam profile which gives an operating timing of the valve corresponding to high speed operation, and either of the high speed cam and low speed-use cam is selected for use. In this system, the on-off valve is driven by either the low speed-use cam or high speed-use cam so there was the problem that the operating timing of the valve could not be gradually changed. That is, there was the problem that it was not possible to continuously change the opening time of the valve.

Regarding the valve drive structure which is disclosed in the above Japanese Patent Publication No. 2004-183510 A1, in the same way, it uses one cam which has a cam profile which corresponds to advanced closing of the intake valve and another cam which has a cam profile which delays the opening time from the one cam so as to drive the on-off valve. When driving the on-off valve, one of the cams is used to drive the on-off valve. For this reason, there was the problem that it was not possible to gradually change the operating timing of the on-off valve.

In this regard, in an intake stroke of an internal combustion engine, loss which is called "intake loss" occurs. This loss is also called "pumping loss" and corresponds to the energy loss which occurs when taking in air or an air-fuel mixture to a combustion chamber. If this loss becomes large, the fuel consumption amount becomes larger and the output of the internal combustion engine becomes smaller.

In the variable valve drive system which is disclosed in the above Japanese Patent Publication No. 2008-14191 A1, it is disclosed to variably control the opening characteristics of only the first valve while making the opening characteristics of the second valve constant. In this system, it is possible to extend the time during which at least one of the two valves is open. In this regard, in this system, the time during which only one of the valves is open is long, so the intake loss becomes large and achievement of both an improvement in the fuel consumption amount and an improvement in the output becomes difficult.

The present invention has as its object the provision of a valve drive system of an internal combustion engine with a small intake loss.

### Solution to Problem

The valve drive system of an internal combustion engine of the present invention is a valve drive system of an internal combustion engine which can increase an expansion ratio when fuel burns and a piston is pushed compared with an actual compression ratio when an air-fuel mixture which contains fuel is compressed by a piston, which system is provided with a first intake cam and a second intake cam which operate intake valves and a variable valve timing device which changes at least one operating timing of an operating timing of intake valves by the first intake cam and an operating timing of intake valves by the second intake cam. The intake valves are formed to be operated by being driven by the first intake cam and second intake cam. The variable valve timing device is formed so as to be able to offset the operating timing of the intake valves by the first intake cam and the operating timing of the intake valves by the second intake cam. The first intake cam and second intake cam include circular parts of substantially circular cross-sectional shapes and bulging parts which project from the circular parts and which drive the intake valves. At least one of the bulging part of the first intake cam and the bulging part of the second intake cam has a concentric circular part which is formed in a concentric circular shape with the circular part. The concentric circular part holds the amount of movement of the intake valve substantially constant in the period during which the intake valve is open.

In the above invention, the bulging part of the first intake cam and the bulging part of the second intake cam have concentric circular parts. The first intake cam and second intake cam are formed so that the amount of movement of the intake valve which is driven by the concentric circular part of the first intake cam and the amount of movement of the intake valve which is driven by the concentric circular part of the second intake cam become substantially the same. When the operating timing of the intake valves by the first intake cam and the operating timing of the intake valves by the second intake cam are different from each other, the time period where the concentric circular part of the first intake cam opens the intake valve and the time period where the concentric circular part of the second intake cam opens the intake valve preferably overlap each other.

In the above invention, the system is preferably provided with an operating state detection device which detects an operating state of the internal combustion engine, detects the operating state of the internal combustion engine, and determines the amount of offset between the operating timing of the intake valves by the first intake cam and the operating timing of the intake valves by the second intake cam in accordance with the operating state of the internal combustion engine.

In the above invention, the system is preferably a valve drive system of an internal combustion engine in which a first intake valve and second intake valve are arranged for each cylinder, which is provided with a first transmission member which is interposed between the first intake cam and the first intake valve and transmits drive force of the first intake cam to the first intake valve, a second transmission member which is interposed between the second intake cam and the second intake valve and transmits drive force of the second intake cam to the second intake valve, and a coupling device for coupling and separating the first transmission member and the second transmission member, and which couples or separates the first transmission member and the second transmission member in accordance with the operating state of the internal combustion engine.

### Summary of Invention

According to the present invention, it is possible to provide a valve drive system of an internal combustion engine with a small intake loss.

### Brief Description of Drawings

FIG. 1 is a schematic view of an internal combustion engine in an Embodiment 1.
FIG. 2 is a schematic perspective view of a valve drive system in the Embodiment 1.
FIG. 3 is a schematic disassembled perspective view of he valve drive system in the Embodiment 1.
FIG. 4 is a first schematic cross-sectional view of the valve drive system in the Embodiment 1.
FIG. 5 is a second schematic cross-sectional view of the valve drive system in the Embodiment 1.
FIG. 6 is a schematic cross-sectional view of an intake cam of the valve drive system in the Embodiment 1.
FIG. 7 is a graph of a cam lift of an intake cam in the Embodiment 1.
FIG. 8 is a schematic cross-sectional view of a variable valve timing device which changes an operating timing of intake valves in the Embodiment 1.
FIG. 9 is a graph which explains changes in the operating timing of intake valves in the variable valve timing device in the Embodiment 1.
FIG. 10 is a first graph of valve lift when using the valve drive system in the Embodiment 1 to drive the intake valves.
FIG. 11 is a second graph of a valve lift when using the valve drive system in the Embodiment 1 to drive the intake valves.
FIG. 12 is a schematic cross-sectional view of an intake cam of a valve drive system of a comparative example.
FIG. 13 is a graph of a cam lift of the intake cam of the valve drive system in the comparative example.
FIG. 14 is a graph of a valve lift when using the valve drive system in a first comparative example to drive intake valves.
FIG. 15 is a graph of a valve lift when using the valve drive system in a second comparative example to drive intake valves.
FIG. 16 is a schematic disassembled perspective view of a valve drive system in the Embodiment 2 .
FIG. 17 is a schematic disassembled perspective view of a part of a rocker arm of the valve drive system in the Embodiment 2.
FIG. 18 is a first schematic cross-sectional view of a coupling device which connects one rocker arm and other rocker arm in the valve drive system in the Embodiment 2.
FIG. 19 is a second schematic cross-sectional view of a coupling device which connects one rocker arm and other rocker arm in the valve drive system in the Embodiment 2.
FIG. 20 is a graph of the valve lift of intake valves with one rocker arm and another rocker arm separated in the valve drive system of the Embodiment 2.

### Description of Embodiments

### Embodiment 1

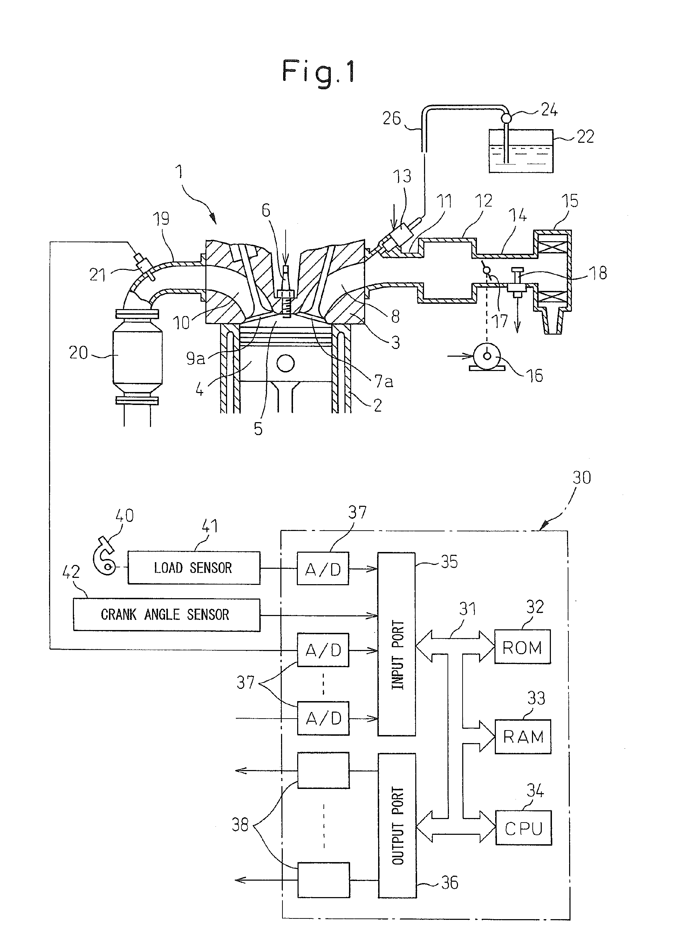

Referring to FIG. 1 to FIG. 15, a valve drive system in the Embodiment 1 of internal combustion engine will be explained. In the present embodiment, a spark ignition type of ignition internal combustion engine will be explained as an example. Further, a valve drive system which drives an intake valve among the on-off valves will be explained as an example.

FIG. 1 is a schematic view of an internal combustion engine in the present embodiment. The internal combustion engine is provided with an engine body 1. The engine body 1 in the present embodiment includes a cylinder block 2 and a cylinder head 3. The cylinder block 2 is formed with hole parts. Inside of each of the hole parts, a piston 4 is arranged. Pistons 4 are arranged for the respective cylinders. The spaces which are formed by the top surfaces of the pistons 4 and the hole parts form combustion chambers 5.

The cylinder head 3 has intake ports 8 as parts of the engine intake passage which communicate with the combustion chambers 5. The cylinder head 3 has exhaust ports 10 as parts of the engine exhaust passage which communicate with the combustion chambers 5. The engine intake passage is a passage which feed air or a mixture of fuel and air to the combustion chambers 5. The engine exhaust passage is a passage for exhausting exhaust gas which is produced due to combustion of fuel in the combustion chambers 5. Intake valves 7a are arranged at the ends of the intake ports 8 and are formed so as to open and close the parts of the engine intake passage which communicate with the combustion chambers 5. The exhaust valves 9a are arranged at the ends of the exhaust ports 10 and are formed so as to open and close the parts of the engine exhaust passage which are communicated with the combustion chambers 5. The cylinder head 3 has spark plugs 6 fastened to it as ignition devices. The spark plugs 6 are formed so as to ignite the fuel in the combustion chambers 5.

The intake ports 8 are connected through intake runners 11 to a surge tank 12. The intake runners 11 have fuel injectors 13 arranged in them for injecting fuel toward the insides of the intake ports 8. The fuel injectors 13 are not limited to this. They may also be arranged to directly inject fuel inside of the combustion chambers 5. The surge tank 12 is connected through an intake duct 14 to an air cleaner 15. At the inside of the intake duct 14, a throttle valve 17 which is driven by an actuator 16 is arranged. Further, inside of the intake duct 14, an intake air detector 18 is arranged for detecting the amount of intake air.

Each fuel injector 13 is connected by a fuel feed pipe 26 to a fuel tank 22. In the middle of the fuel feed pipe 26, an electronic control type variable discharge fuel pump 24 is arranged. In the present embodiment, the fuel tank 22 stores gasoline. The fuel which is stored in the fuel tank 22 is fed through the fuel feed pipe 26 to the fuel injectors 13 by being driven by the fuel pump 24.

On the other hand, the exhaust ports 10 are connected through an exhaust manifold 19 to, for example, a catalytic converter 20 which contains a three-way catalyst. If calling the ratio of air and fuel (hydrocarbons) of the exhaust gas which is fed to the engine intake passage, combustion chambers, or engine exhaust passage the "air-fuel ratio (A/F) of the exhaust gas", an air-fuel ratio sensor 21 for detecting the air-fuel ratio of the exhaust gas is arranged inside the engine exhaust passage at the upstream side of the catalytic converter 20.

The internal combustion engine in the present embodiment is provided with a control device. The control device in the present embodiment includes an electronic control unit 30. The electronic control unit 30 includes a digital computer. The electronic control unit 30 is provided with components which are connected with each other by a bidirectional bus 31 such as a ROM (read only memory) 32, RAM (random access memory) 33, and CPU (microprocessor) 34. The electronic control unit 30 is provided with an input port 35 and output port 36 which are connected by the bidirectional bus 31.

The output signal of the intake air detector 18 and the output signal of the air-fuel ratio sensor 21 are input through corresponding AD converters 37 to the input port 35. Further, an accelerator pedal 40 has a load sensor 41 connected to it for generating an output voltage which is proportional to the amount of depression of the accelerator pedal 40. The output signal of the load sensor 41 is input through the corresponding AD converter 37 to the input port 35. Further, the input port 35 has a crank angle sensor 42 connected to it which generates an output pulse every time a crankshaft rotates by for example 30°. From the output of the crank angle sensor 42, the speed of the engine body 1 can be detected.

On the other hand, the output port 36 is connected through corresponding drive circuits 38 to the spark plugs 6, fuel injectors 13, fuel pump 24, and actuator 16. The electronic control unit 30 in the present embodiment is formed so as to control fuel injection and control ignition.

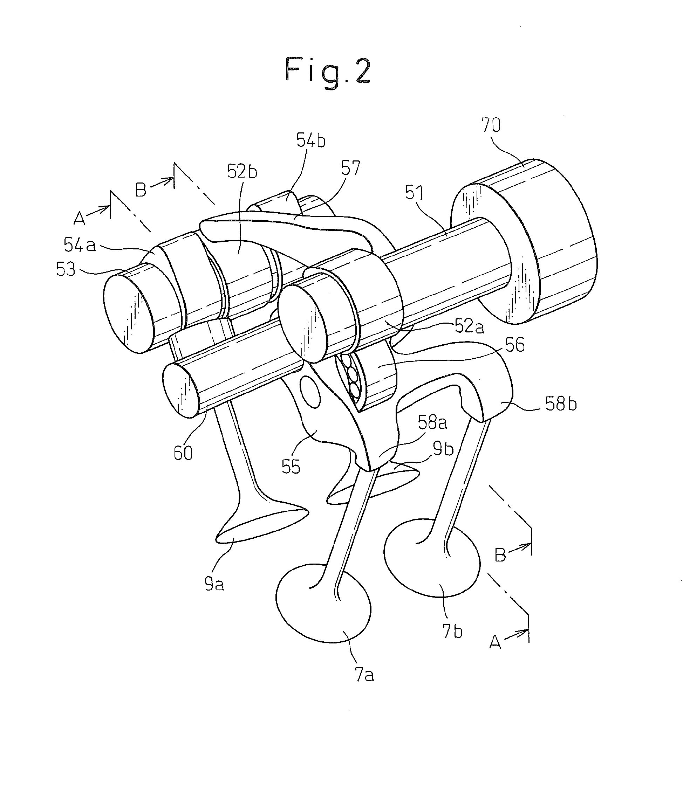

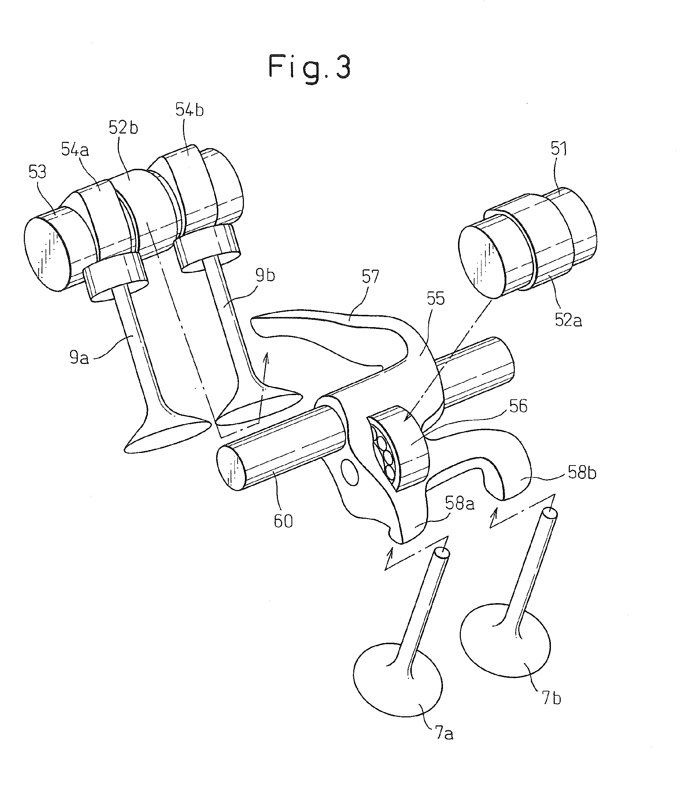

FIG. 2 shows a schematic perspective view of the valve drive system of the present embodiment. FIG. 3 shows a schematic disassembled perspective view of the valve drive system of the present embodiment. Referring to FIG. 2 and FIG. 3, the internal combustion engine in the present embodiment is provided with a plurality of intake valves for each cylinder. Further, it is provided with a plurality of exhaust valves for each cylinder. In the present embodiment, two intake valves 7a, 7b and two exhaust valves 9a, 9b are arranged for each cylinder. The respective intake valves 7a, 7b and exhaust valves 9a, 9b are biased by not shown elastic members in a direction in which the valves close.

The valve drive system is provided with an intake cam 52a as a first intake cam which is supported by an intake cam shaft 51. The intake cam 52a is formed so as to rotate together with the intake cam shaft 51. The intake cam shaft 51 is formed so as to rotate interlocked with movement of the piston 4 which are arranged at the inside of the cylinder.

The valve drive system is provided with a rocker arm 55 as a transmission member which transmits the drive force of the intake cams 52a, 52b to the intake valves 7a, 7b. The rocker arm 55 is supported by a rocker shaft 60. The rocker arm 55 is formed so as to rock about the center axis of the rocker shaft 60 used as the support rod. The rocker arm 55 has pushing parts 58a, 58b for pushing the intake valves 7a, 7b. The pushing parts 58a, 58b at the present embodiment are arranged right above the intake valves 7a, 7b. The rocker arm 55 includes a roller 56. The roller 56 is supported by the rocker arm body so as to be able to rotate. The intake cam 52a contacts the roller 56.

The valve drive system of the present embodiment has exhaust cams 54a, 54b for driving the exhaust valves 9a, 9b. The exhaust cams 54a, 54b have cam noses and are arranged to push the exhaust valves 9a, 9b. The exhaust cams 54a, 54b are supported by an exhaust cam shaft 53. The exhaust cams 54a, 54b are formed so as to integrally rotate with the exhaust cam shaft 53. The exhaust cam shaft 53 is formed so as to rotate interlocked with the movement of the piston 4 which is arranged at the inside of the cylinder.

The valve drive system of the present embodiment is provided with an intake cam 52b as a second intake cam which drives the intake valves 7a, 7b. The intake cam 52b in the present embodiment is supported at the exhaust cam shaft 53. The intake cam 52b is formed so as to rotate together with the exhaust cam shaft 53.

The rocker arm 55 in the present embodiment has an extension part 57 which extends toward the intake cam 52b which is arranged at the exhaust cam shaft 53. The extension part 57 in the present embodiment is formed in a rod shape. The extension part 57 contacts the intake cam 52b at the front end. In the present embodiment, the extension part 57 pushes against and contacts the upper side of the intake cam 52b. In this way, at the rocker arm 55 in the present embodiment, the extension part 57 is formed at one side when the rocker arm 55 rocks while the pushing parts 58a, 58b and roller 56 are formed at the other side.

In the present embodiment, a second intake cam constituted by the intake cam 52b is arranged between the two exhaust cams 54a, 54b, but the invention is not limited to this. The intake cam 52b may also be arranged in the region at the outside of the two exhaust cams 54a, 54b.

Referring to FIG. 2, the valve drive system of the present embodiment is provided with a variable valve timing device 70 which changes operating timings of the intake valves 7a, 7b by the intake cam 52a. The variable valve timing device 70 is formed so as to be able to change the operating timings of the intake valves with respect to movement of the piston 4 or crank angle. The variable valve timing device 70 in the present embodiment is connected to the intake cam shaft 51. The variable valve timing device 70 in the present embodiment is formed so as to be able to change the phase of the intake cam 52a with respect to the crank angle.

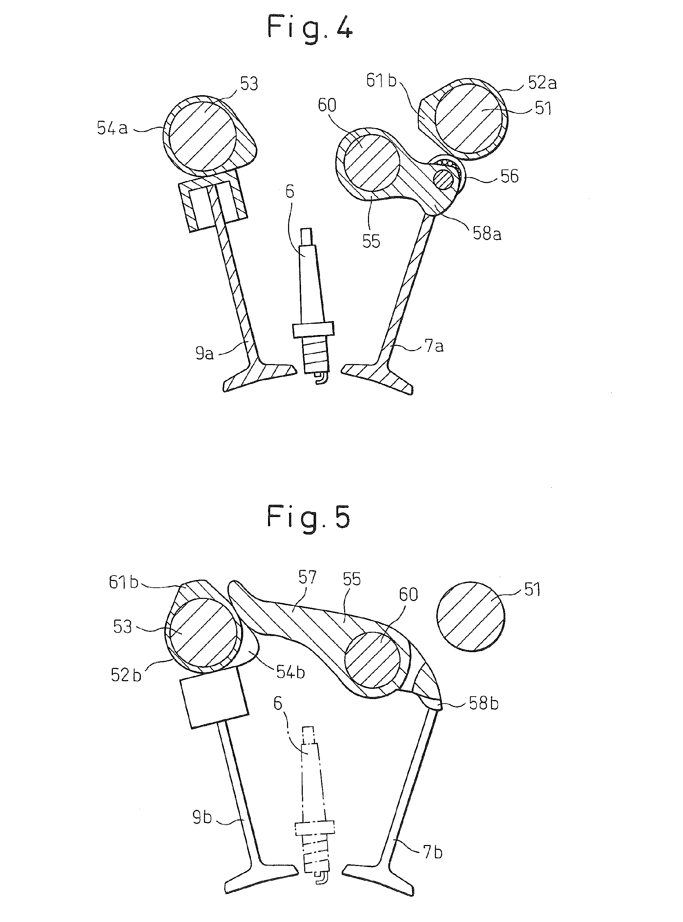

FIG. 4 shows a first schematic cross-sectional view of the valve drive system of the present embodiment. FIG. 4 is a schematic cross-sectional view when cut along the line A-A in FIG. 2. FIG. 4 is a schematic cross-sectional view when cut along the intake valve 7a and the exhaust valve 9a.

In the present embodiment, due to the rotational force of the crankshaft, the intake cam shaft 51 rotates. Due to the intake cam shaft 51 rotating, the intake cam 52a rotates. The intake cam 52a has a bulging part constituted by the cam nose 61b. By the cam nose 61b pushing against the rocker arm 55 through the roller 56, the rocker arm 55 rocks. By the rocker arm 55 rocking, the pushing part 58a pushes against the intake valve 7a whereby the intake valve 7a opens in state. Further, by the rocker arm 55 rocking, the pushing part 58b pushes against the intake valve 7b whereby the intake valve 7b opens in state (see FIG. 1 and FIG. 2).

On the other hand, for example, due to the rotational force of the crankshaft, the exhaust cam shaft 53 rotates. Due to the exhaust cam shaft 53 rotating, the exhaust cam 54a rotates. By the cam nose of the exhaust cam 54a pushing against the exhaust valve 9a, the exhaust valve 9a opens in state. In the same way, by the exhaust cam 54b rotating, the exhaust valve 9b can be opened (see FIG. 1 and FIG. 2).

FIG. 5 shows a second schematic cross-sectional view of the valve drive system of the present embodiment. FIG. 5 is a schematic cross-sectional view when cut along the line B-B in FIG. 2. FIG. 5 is a schematic cross-sectional view when cut along the part of the extension part of the rocker arm.

The intake valves 7a, 7b in the present embodiment are also driven by the second intake cam constituted by the intake cam 52b. The extension part 57 abuts against the surface of the intake cam 52b. By the exhaust cam shaft 53 rotating, the intake cam 52b rotates. The intake cam 52b has a bulging part constituted by the cam nose 61b. The cam nose 61b of the intake cam 52b pushes against the extension part 57, whereby the extension part 57 is lifted up. That is, the rocker arm 55 is rocked. By the extension part 57 being pushed up, the pushing part 58b of the rocker arm 55 is pushed downward. By the pushing part 58b being pushed downward, the intake valve 7b is pushed down and opens in state. Further, by the rocker arm 55 rocking, the pushing part 58a pushes against the intake valve 7a whereby the intake valve 7a opens in state (see FIG. 1 and FIG. 2). In this way, due to the action of the intake cams 52a, 52b, the intake valves 7a, 7b are driven.

As explained above, the intake valves 7a, 7b in the present embodiment are driven not only by the first intake cam constituted by the intake cam 52a but also the second intake cam constituted by the intake cam 52b. In the valve drive system of the present embodiment, the intake valves 7a, 7b simultaneously operate to open and close.

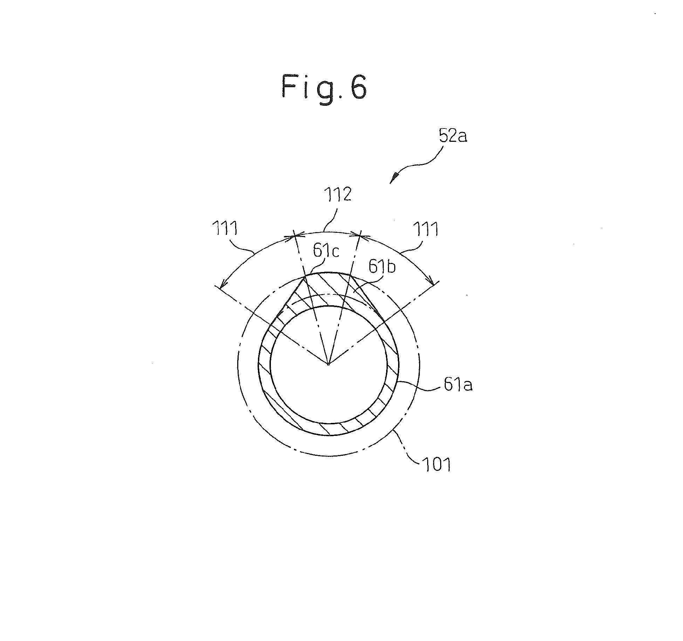

FIG. 6 shows a schematic cross-sectional view of an intake cam of the valve drive system of the present embodiment. In FIG. 6, the first intake cam constituted by the intake cam 52a is taken up as an example. In the present embodiment, the first intake cam and the second intake cam are formed so as to become substantially the same in cross-sectional shapes. The cross-sectional shapes of the intake cams are not limited to this. The first intake cam and second intake cam may also be different from each other in cross-sectional shape.

The intake cam 52a has a circular part 61a having a substantially circular shape in cross-sectional shape and a bulging part constituted by the cam nose 61b which sticks out from the circular part 61a and drives the intake valves. The circular part 61a of the intake cam 52a is formed into a shape coaxial with the intake cam shaft 51. Further, the circular part 61a of the intake cam 52b is formed into a shape coaxial with the exhaust cam shaft 53.

The cam nose 61b in the present embodiment has a concentric circular part 61c which is formed in a circular shape concentric with the circular part 61a. The concentric circular part 61c is formed at the top surface of the cam nose 61b. The concentric circular part 61c is included in a concentric circle 101 of the circular part 61a.

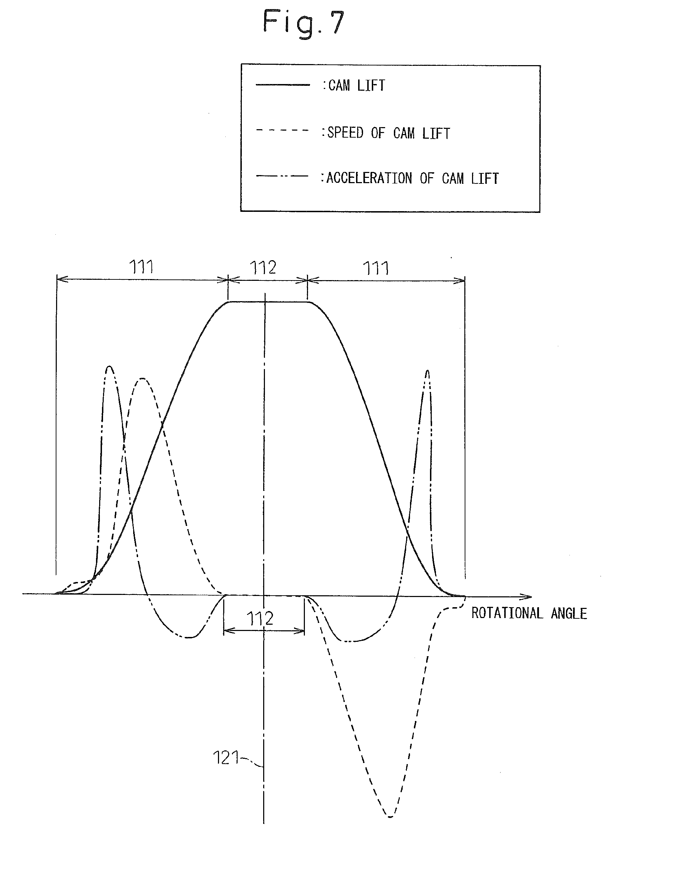

FIG. 7 shows a graph of a cam lift of an intake cam in the present embodiment. The abscissa is the rotational angle of the intake cam. The cam lift corresponds to the amount of movement of the valves (valve lift). In the graph of FIG. 7, the cam lift is shown by the solid line, the speed of the cam lift is shown by the broken line, and the acceleration of the cam lift is shown by the two-dot chain line. Further, the point of time of half of the time period during which the cam nose of the intake cam causes a cam lift is shown by the center line 121 of the one-dot chain line. The center line 121 corresponds to the point where the cam lift becomes maximum when, for example, the cam nose does not have a concentric circular part.

In the region of the circular part 61a of the intake cam, the cam lift becomes zero. The cam lift rises along with the rotational angle of the intake cam 52a in the region of the cam nose 61b. The cam lift becomes maximum at the concentric circular part 61c of the cam nose 61b. The region of the concentric circular part 61c of the cam nose 61b is shown by the arrow 112. At the region of the concentric circular part 61c, the cam lift becomes substantially constant. That is, the amount of movement of the intake valves is maintained substantially constant. Further, in the region of the concentric circular part 61c, the speed of the cam lift and the acceleration of the cam lift become zero.

The region of the lifting part of the cam nose 61b is shown by the arrow 111. In this region, the cam lift rises and falls. Along with the rise or fall of the cam lift, the speed and acceleration of the cam lift change. In this way, the cam nose of the intake cam in the present embodiment is formed with a concentric circular part at which the cam lift is maintained substantially constant.

Next, the variable valve timing device in the present embodiment will be explained. The variable valve timing device in the present embodiment is formed to be able to change the starting timing of the actual compression action. The variable valve timing device 70 is connected to the output port 36 of the electronic control unit 30 and is controlled by the electronic control unit 30 (see FIG. 1).

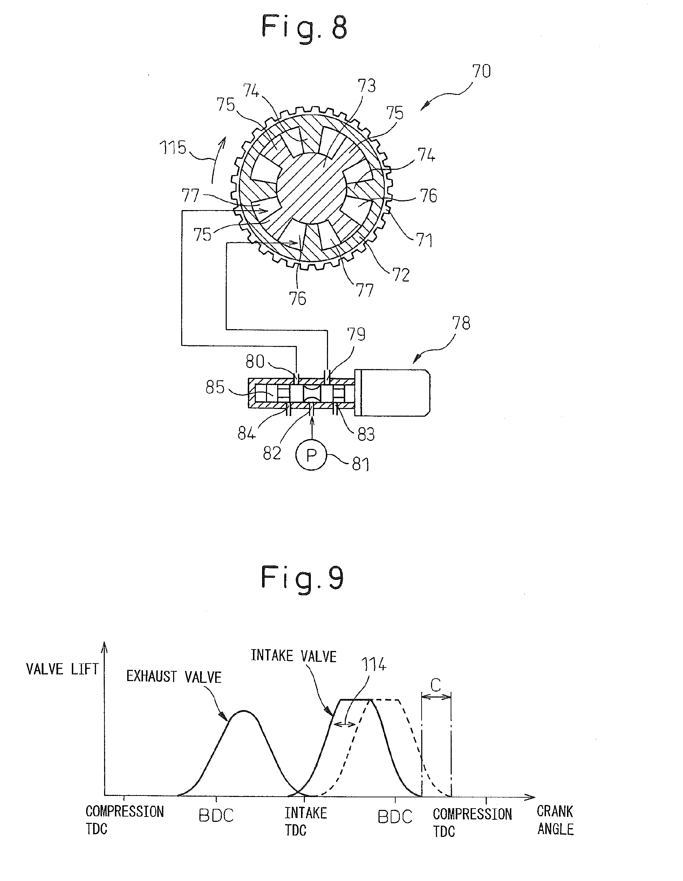

FIG. 8 shows a schematic view of the variable valve timing device in the present embodiment. The variable valve timing device 70 in the present embodiment is attached to an end of the intake cam shaft 51 (see FIG. 2).

The variable valve timing device 70 in the present embodiment is provided with a timing pulley 71 which rotates in the direction of the arrow 115 by a timing belt which engages with the crankshaft of the engine body and a cylindrical housing 72 which rotates together with the timing pulley 71. The variable valve timing device 70 is provided with a shaft 73 which rotates together with the intake cam shaft 51 and can rotate relative to the cylindrical housing 72, a plurality of partition walls 74 which extend from the inner circumferential surface of the cylindrical housing 72 to the outer circumferential surface of the shaft 73, and vanes 75 which extend between the partition walls 74 from the outer circumferential surface of the shaft 73 to the inner circumferential surface of the cylindrical housing 72. At the two sides of the vanes 75, advance-use oil pressure chambers 76 and retardation-use oil pressure chambers 77 are formed.

The variable valve timing device includes a feed device which feeds working oil to the oil pressure chambers 76, 77. The feed device includes a working oil feed control valve 78. The working oil feed control valve 78 includes oil pressure ports 79, 80 which are connected to the oil pressure chambers 76, 77, a feed port 82 of working oil which is discharged from the oil pressure pump 81, a pair of drain ports 83, 84, and a spool valve 85 which controls communication and cutoff between the ports 79, 80, 82, 83, and 84.

When the phase of the intake cam 52a which is arranged at the intake cam shaft 51 should be advanced, in FIG. 8, the spool valve 85 is moved to the right. The working oil which is fed from the feed port 82 is fed through the oil pressure port 79 to the advance-use oil pressure chambers 76 while the working oil in the retardation-use oil pressure chambers 77 is discharged from the drain port 84. At this time, the shaft 73 is rotated relative to the cylindrical housing 72 in the direction of the arrow 115.

As opposed to this, when retarding the phase of the intake cam 52a which is arranged at the intake cam shaft 51, in FIG. 8, the spool valve 85 is moved to the left. The working oil which is fed from the feed port 82 is fed through the oil pressure port 80 to the retardation-use oil pressure chambers 77 while the working oil in the advance-use oil pressure chambers 76 is discharged from the drain port 83. At this time, the shaft 73 is rotated relative to the cylindrical housing 72 in a direction opposite to the arrow 115.

When the shaft 73 is rotating relative to the cylindrical housing 72, the spool valve 85 is returned to the neutral position whereby the rotational operation of the shaft 73 stops. The shaft 73 is held at the position at that time. Therefore, the variable valve timing device 70 can advance the phase of the intake cam 52a which is fastened to the intake cam shaft 51 by exactly the desired amount. Alternatively, it can retard the phase of the intake cam 52a by exactly the desired amount.

FIG. 9 shows a graph when changing the operating timing of intake valves by the variable valve timing device of the present embodiment. This graph shows the state of using the single intake cam to which the variable valve timing device is connected to drive the intake valves. The abscissa is the crank angle, while the ordinate is the amount of movement of the valves constituted by the valve lift.

By driving the variable valve timing device, as shown by the arrow 114, it is possible to change the operating timing of the intake valves which is shown by the solid line to the operating timing of the intake valves which is shown by the broken line. The solid line shows the state where the variable valve timing device advances the phase of the intake cam the most, while the broken line shows the state where it retards the phase of the intake cam the most. The opening timing of the intake valves can be freely set between the range which is shown by the solid line and the range which is shown by the broken line. The closing timing of the intake valves can also be set to any crank angle within the range which is shown by the reference sign C.

Note that, the variable valve timing device is not limited to the above embodiment. It is possible to employ any device which can change the operating timing of the valves.

The internal combustion engine in the present embodiment can retard the timing for closing the intake valves to thereby increase the expansion ratio at the time when the fuel burns and pushes the piston over the actual compression ratio when the air-fuel mixture which contains fuel is compressed by the piston. That is, the internal combustion engine of the present embodiment can burn fuel by an Atkinson cycle or other high expansion ratio cycle.

The variable called the "normal compression ratio" is determined by the structure of the internal combustion engine. The normal compression ratio is determined by the volume of the combustion chamber and stroke volume of the piston when the piston reaches top dead center. This compression ratio is also called the "mechanical compression ratio". The mechanical compression ratio of the internal combustion engine, if referring to the volume of the combustion chamber when the piston reaches top dead center as simply the "volume of the combustion chamber", is shown by (compression ratio) = (volume of combustion chamber + stroke volume of piston)/(volume of combustion chamber).

The internal combustion engine in the present embodiment can delay the timing for closing the intake valves so as to reduce the volume when the combustion chamber is closed in the compression stroke. No compression action is performed while the intake valves are opened, so the actual compression ratio can be made smaller. That is, it is possible to reduce the actual compression ratio from the mechanical compression ratio. Here, the actual compression ratio can be shown by (actual compression ratio) = (volume of combustion chamber + stroke volume of piston from position where intake valves close to top dead center)/(volume of combustion chamber).

On the other hand, the expansion ratio when the fuel burns and expands becomes equal to the mechanical compression ratio. By performing high expansion rate control which retards the timing of closing the intake valves in an internal combustion engine with a high mechanical compression ratio in this way, it is possible to keep the pressure of the combustion chamber from becoming overly high and abnormal combustion from occurring. Further, it is possible to increase the expansion ratio so as to improve the heat efficiency. Furthermore, it is possible to reduce the intake loss so as to enable increase of the opening degree of the throttle valve.

Referring to FIG. 2 and FIG. 3, the variable valve timing device 70 in the present embodiment is formed so as to be able to change the phase of the first intake cam constituted by the intake cam 52a. As opposed to this, the second intake cam constituted by the intake cam 52b is formed so as to rotate by a constant phase with respect to the movement of the piston or crank angle. The rocker arm 55 in the present embodiment is formed to transmit the drive force of the intake cam 52a and the drive force of the intake cam 52b to the intake valves 7a, 7b. The valve drive system of the present embodiment can offset the operating timings of the intake valves 7a, 7b by the action of the intake cam 52a and the operating timings of the intake valves 7a, 7b by the action of the intake cam 52b. Further, the operating timings of the intake valves 7a, 7b due to the action of the intake cam 52a can be continuously gradually changed.

The valve drive system of the present embodiment is provided with an operating state detection device which detects an operating state of the internal combustion engine and is formed so as to change the phase of the intake cam 52a in accordance with the operating state which is detected by the operating state detection device. That is, it is formed so as to determine the amount of offset of the operating timing of the intake valves by the intake cam 52a and the operating timing of the intake valves by the intake cam 52b.

Referring to FIG. 1, the operating state detection device in the present embodiment can detect the load of the internal combustion engine. The load of the internal combustion engine can, for example, be estimated from the output of the load sensor 41 which detects the amount of depression of the accelerator pedal 40. Alternatively, it can be estimated from the opening degree of the throttle valve 17 etc. Further, the operating state detection device in the present embodiment can detect the engine speed of the internal combustion engine. The engine speed can be detected by the output of the crank angle sensor 42.

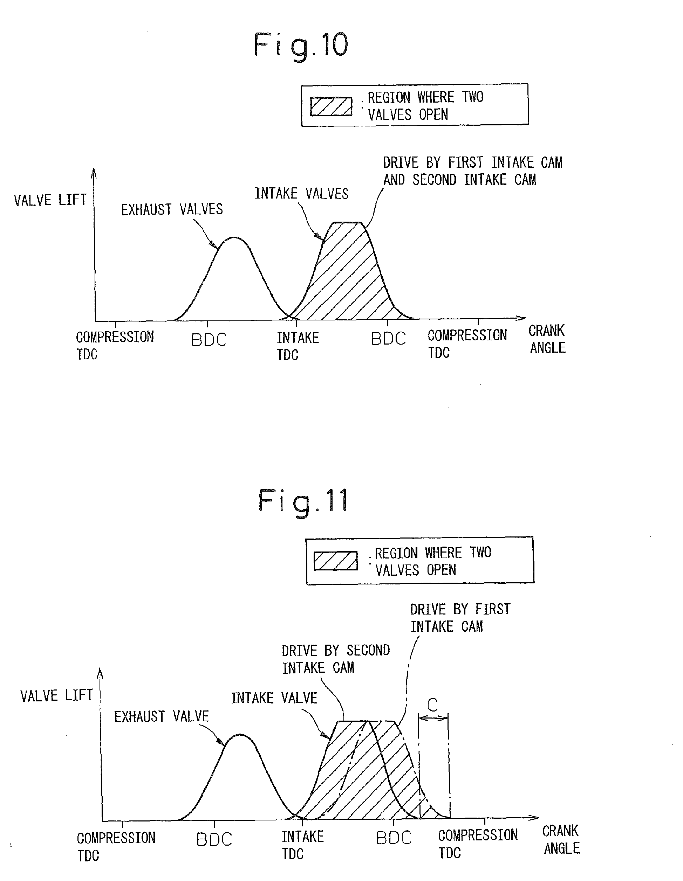

FIG. 10 shows a graph which explains the drive states of the exhaust valves and intake valves when the internal combustion engine of the present embodiment is performing first operational control. The abscissa shows the crank angle, while the ordinate shows the valve lift. In the example which is shown in FIG. 10, the exhaust valves open in the range of crank angle from slightly before bottom dead center (BDC) of the piston to substantially top dead center (TDC).

The first operational control in the present embodiment is used in the case where the load of the engine body is large and the engine speed is low. In the first operational control, the variable valve timing device is used to control the phase of the intake cam 52a and the phase of the intake cam 52b to become substantially the same. For this reason, the change in the valve lifts of the intake valves 7a, 7b becomes substantially the same as the case of being driven by a single intake cam.

In the intake stroke, the intake valves are made to open when the piston is substantially at top dead center in position, while the intake valves are made to close when the piston is substantially at bottom dead center in position. The two intake valves 7a, 7b are driven by a single rocker arm 55, so the two intake valves 7a, 7b substantially simultaneously open and close. When the load of the internal combustion engine is large and the engine speed is low, closing the intake valves faster enables a larger amount of air-fuel mixture or air to be taken in. For this reason, in the first operational control, control is performed to match the phases of the two intake cams 52a, 52b and close the intake valves early.

FIG. 11 is a graph which explains the drive states of the exhaust valves and intake valves when the internal combustion engine of the present embodiment is performing second operational control. The drive state of the exhaust valves is similar to the first operational control in the present embodiment. In the second operational control, high expansion ratio control is performed for retarding the timing for closing the intake valves. High expansion ratio control can be performed in all regions of the engine speed at the time of a low load.

In the second operational control of the present embodiment, due to the variable valve timing device, the phase of the intake cam 52a is retarded from the phase of the intake cam 52b. Control is performed for retarding the operating timing of the intake valves 7a, 7b which are driven by the intake cam 52a. For this reason, the intake valves 7a, 7b are driven by the intake cam 52b when starting to open, then are driven by the intake cam 52a. The timing for closing the intake valves 7a, 7b can be retarded. Due to this control, it is possible to reduce the actual compression ratio at the cylinder, while maintaining the state of a large expansion ratio. As a result, it is possible to increase the expansion ratio over the actual compression ratio.

Next, in third operational control in the present embodiment, when the phase of the intake cam 52a is retarded from the phase of the intake cam 52b, for example, the phase of the intake cam 52a, which is smaller than the second operational control, is retarded. The third operational control can be employed when the internal combustion engine is in an operating state of a high load and a high engine speed. When the engine speed is high, it is possible to close the intake valves slower so as to use the inertia of the air and take in a larger amount of air-fuel mixture or air inside of the combustion chamber. For this reason, in the high load and high speed region, control may be performed to retard the phase of the intake cam 52a. Control may be performed to retard the operating timing of the intake valves 7a, 7b which are driven by the intake cam 52a.

The internal combustion engine in the present embodiment can detect the operating state by the operating state detection device and gradually change the operational control. Alternatively, it is possible to detect the operating state and determine the amount of offset of the operating timing of the intake valves according to the action of the first intake cam and the operating timing of the intake valves according to the action of the second intake cam corresponding to the operating state. Due to this control, it is possible to operate by the optimal amount of offset corresponding to the operating state of the internal combustion engine. For this reason, it is possible to reduce the intake loss while suppressing the amount of fuel consumption and improving the output.

For example, when the engine speed of the internal combustion engine is low and the load of the internal combustion engine shifts from a low load to a high load, it is possible to gradually shift from the above second operational control to first operational control. Alternatively, for example, if the internal combustion engine is under high load, when the engine speed gradually rises, it is possible to gradually shift from the first operational control to the third operational control.

The operating state which is detected by the operating state detection device is not limited to the engine speed and load. It is possible to employ any variable which affects the combustion state of the fuel.

The internal combustion engine in the present embodiment can reduce the intake loss since it extends the period during which both intake valves are open. Here the valve drive system of a comparative example of the present embodiment will be used as an example for the explanation.

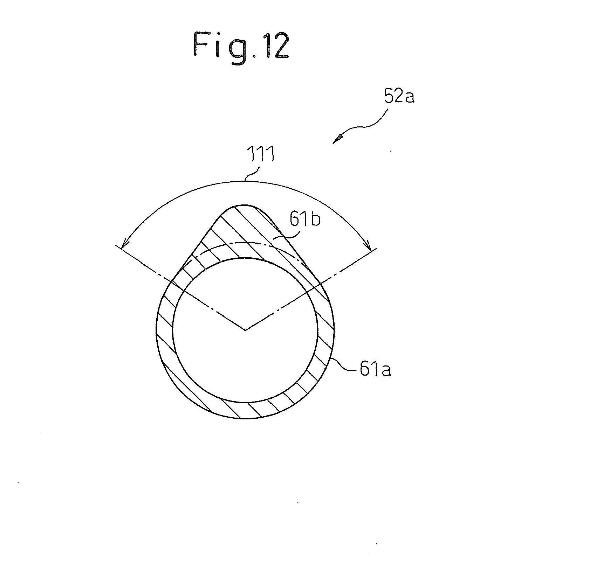

FIG. 12 shows a schematic cross-sectional view of an intake cam of a comparative example. The intake cam 52a of the comparative example has a circular part 61a and a cam nose 61b. The cam nose 61b does not have a concentric circular part and is formed to have an approximately mountain shape in cross-sectional shape. The region which is shown by the arrow 111 corresponds to the region of the lifting part where the cam lift changes.

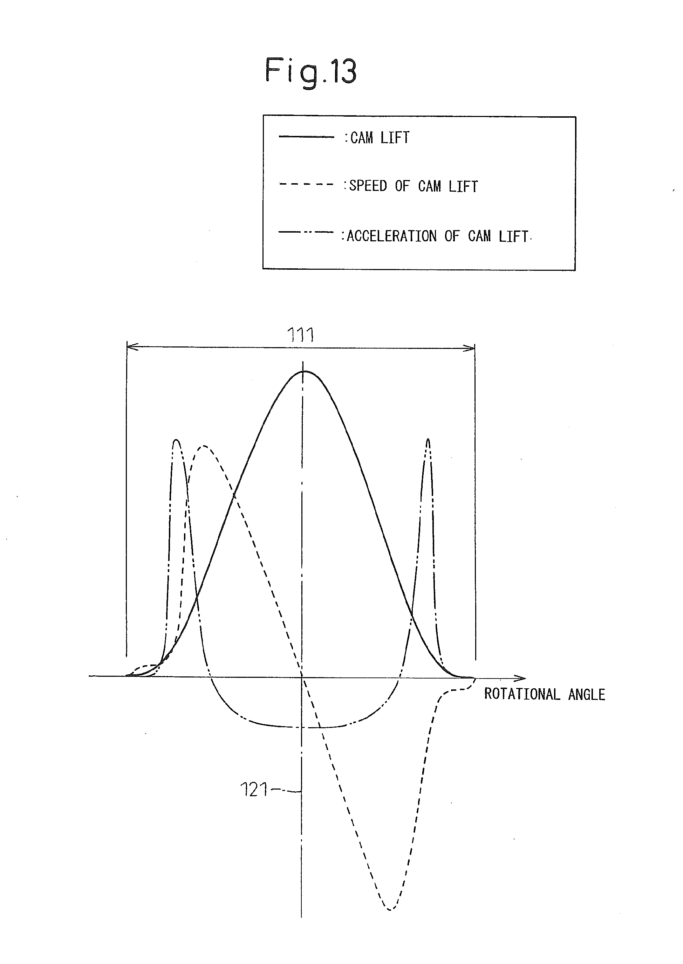

FIG. 13 shows a graph which explains the relationship between a rotational angle and cam lift of an intake cam of a comparative example. The cam lift increases steadily until the vertex of the cam nose 61b and steadily decreases after the vertex of the cam nose 61b. The speed of the cam lift and the acceleration of the cam lift fluctuate. In particular, the speed of the cam lift is constantly changing.

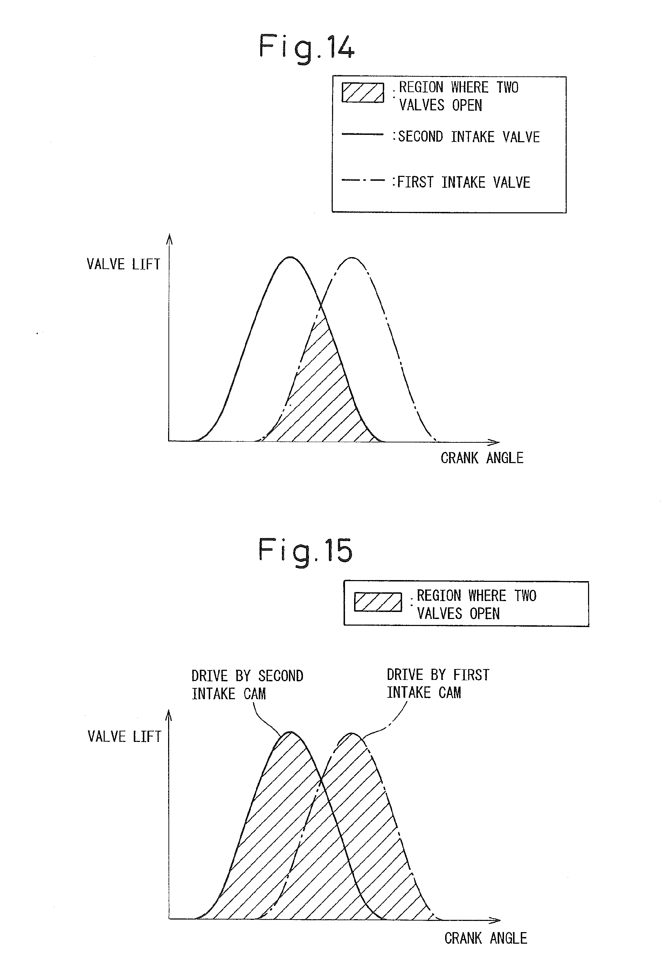

FIG. 14 shows a graph which explains the operation of intake valves of a valve drive system of a first comparative example. The valve drive system of the first comparative example is provided with two intake cams and two intake valves. For the two intake cams, intake cams of the comparative example are used. Further, the valve drive system of the first comparative example is formed so that one intake cam drives one intake valve, while the other intake cam drives the other intake valve independently. That is, the two intake valves are respectively independently driven by the intake cams.

The graph of FIG. 14 is a graph of the amounts of movement of the intake valves when using the variable valve timing device to delay the phase of the first intake cam from the phase of the second intake cam. In the valve drive system of the first comparative example, one cam drives one intake valve, so the period in which at least one of the two intake valves 7a, 7b is opened becomes longer. In this regard, the period in which one valve is opened and the other valve is closed becomes longer, while the period in which the two valves are simultaneously open becomes shorter. As opposed to this, the valve drive system of the present embodiment, referring to FIG. 11, can extend the periods in which the two intake valves are opened. As a result, the intake loss can be reduced and the heat efficiency can be improved.

In particular, in high expansion ratio control, even at the end of the period in which the intake valves are opened, it is preferable that a plurality of intake valves be open. In high expansion ratio control, to retard the timing of closing the intake valves, part of the air-fuel mixture which flows into the combustion chamber is discharged into the intake port while the piston rises. In this case as well, by a plurality of intake valves opening, the force of raising the piston can be reduced and the loss can be decreased.

FIG. 15 shows a graph which explains the operation of the intake valves of the valve drive system of a second comparative example. The valve drive system of the second comparative example replaces the intake cams of the valve drive system of the present embodiment with the intake cams of the comparative example. That is, the two intake valves 7a, 7b are driven by a single rocker arm 55. In the valve drive system of the second comparative example, a difference arises in the coupling part of the drive of the intake valve by the second intake cam and the drive of the intake valve by the first intake cam. During the period which an intake valve is moving in the closing direction due to the action of the second intake cam, an intake valve is rapidly turning to the open direction due to the action of the first intake cam. In the system of the second comparative example, at this time, sometimes shock occurs in the operation of the intake valves. Further, noise is liable to be generated and the operation of the intake valves is liable to become unstable.

Referring to FIG. 11, as opposed to this, the valve drive system of the present embodiment is formed so that when the intake cams are out of phase from each other, at any phase differences, the period in which the concentric circular part of the first intake cam opens the intake valve and the period in which the concentric circular part of the second intake cam opens the intake valve overlap with each other. Due to this configuration, when the lifts of the intake valves become maximum, the valve lifts of the intake valves can be kept substantially constant. For this reason, it is possible to suppress shock when driving the intake valves.

Further, in the present embodiment, by making the phase of the first intake cam deviate to the maximum extent from the phase of the second intake cam, the amount of offset of the operating timing of the first intake valve with respect to the operating timing of the second intake valve becomes maximum. In this case as well, the valve drive system of the present embodiment is formed so that the period during which an intake valve is opened by the concentric circular part of the first intake cam and the period during which an intake valve is opened by the concentric circular part of the second intake cam overlap. By employing this constitution, even when the above amount of offset becomes the maximum, it is possible to maintain the maximum value of the lift of the intake valves substantially constant and suppress shock given to the intake valves. Alternatively, no matter by what amount of offset the operating timing of the first intake valve is shifted, it is possible to maintain the maximum value of the lift of the intake valve substantially constant.

In the present embodiment, two intake valves are arranged for one cylinder, but the invention is not limited to this. A single intake valve is also possible. Further, in the present embodiment, two intake cams drive the intake valves, but the invention is not limited to this. A plurality of intake cams may be arranged for one cylinder.

Furthermore, in the present embodiment, the system is formed so that the variable valve timing device is connected to the first intake cam, the phase of the first intake cam is variable, and the operating timing of the first intake valve is shifted, but the invention is not limited to this. It is sufficient that at least one of the first intake cam and second intake cam have the variable valve timing device connected to it. Alternatively, the internal combustion engine may be formed so that operating timing of the intake valves by the first intake cam and the operating timing by the second intake cam can be offset from each other.

Further, in the present embodiment, the first intake cam is arranged at the intake cam shaft, and the second intake cam is arranged at the exhaust cam shaft, but the invention is not limited to this. The first intake cam and second intake cam can be arranged at any shaft which they rotate interlocked with the movement of the piston in the cylinder. Further, the valve drive system is not limited to an embodiment where the intake cams drive the intake valves through the rocker arms and other transmission members and may be formed so that the intake cams directly drive the intake valves.

Further, in the present embodiment, concentric circular parts are formed at both the bulging part of the first intake cam and the bulging part of the second intake cam, but the invention is not limited to this. It is sufficient that a concentric circular part be formed at least at one of the intake cams.

### Embodiment 2

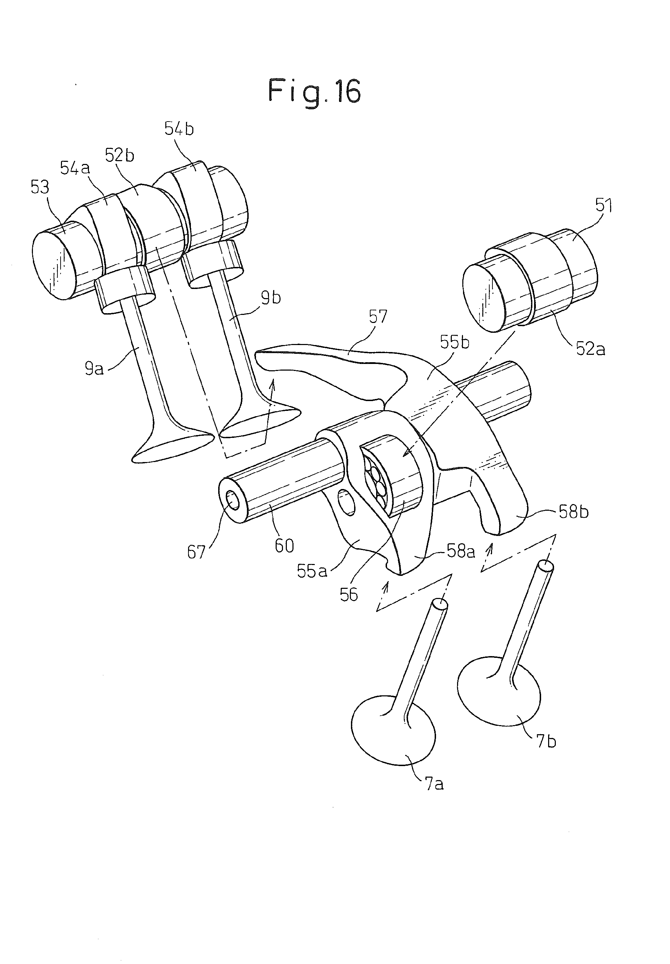

Referring to FIG. 16 to FIG. 20, a valve drive system of an internal combustion engine in the Embodiment 2 will be explained. The valve drive system of the present embodiment differs from the Embodiment 1 in the structure of the transmission member, as constituted by the rocker arm, which transmits the drive force of the intake cam to the intake valves.

FIG. 16 shows a schematic disassembled perspective view of the valve drive system of the present embodiment. The valve drive system of the present embodiment is provided with a first transmission member constituted by a rocker arm 55a and with a second transmission member constituted by a rocker arm 55b. The rocker arm 55a and the rocker arm 55b are formed to be able to independently rock about the rocker shaft 60 as the center of rocking. The first intake cam constituted by the intake cam 52a and the second intake cam constituted by the intake cam 52b in the present embodiment are formed to have cross-sectional shapes which have circular parts and bulging parts and to have bulging parts which have concentric circular parts.

The rocker arm 55a includes a roller 56 and a pushing part 58a. The rocker arm 55b includes an extension part 57 and a pushing part 58b. The intake cam 52a is fastened to the intake cam shaft 51. The intake cam shaft 51 has a not shown variable valve timing device connected to it.

The intake cam 52a pushes against the rocker arm 55a through the roller 56. The rocker arm 55a pushes against the intake valve 7a, whereby the intake valve 7a can be opened. On the other hand, the intake cam 52b which is attached to the exhaust cam shaft 53 pushes against the rocker arm 55b, whereby the rocker arm 55b is made to rock. When the rocker arm 55b rocks, it pushes against the intake valve 7b whereby the intake valve 7b can be opened.

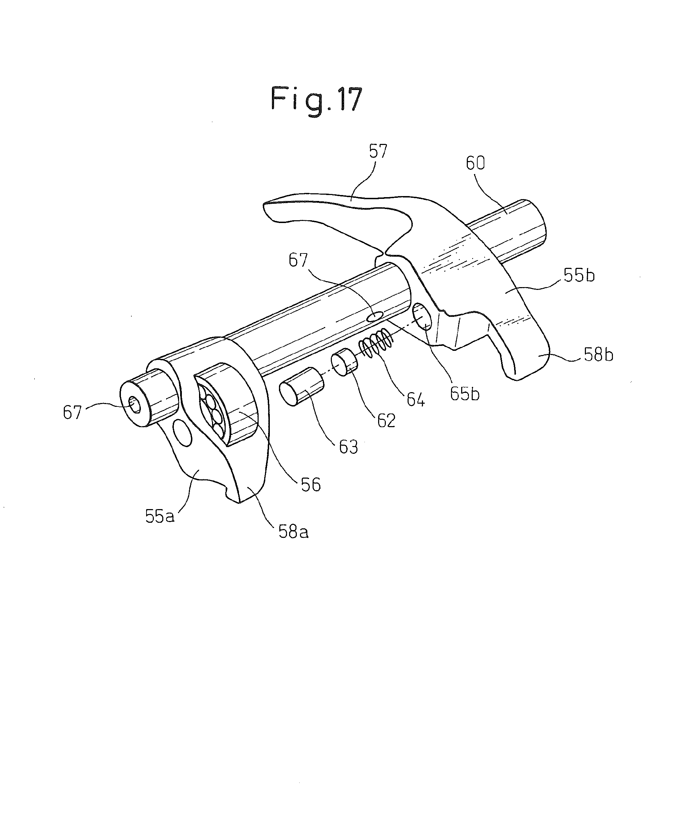

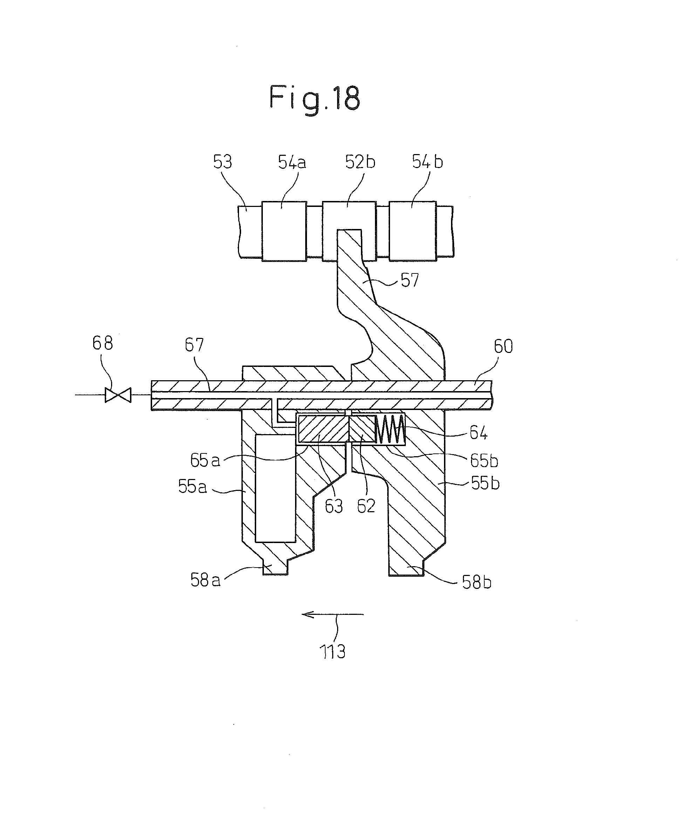

FIG. 17 is a schematic perspective view of the time when disassembling the part of the rocker arm of the valve drive system of the present embodiment. FIG. 18 shows a first schematic cross-sectional view when cutting a rocker arm and a rocker shaft for making the rocker arm rock.

Referring to FIG. 17 and FIG. 18, the valve drive system of the present embodiment includes a coupling device which couples and separates the rocker arm 55a and the rocker arm 55b. The coupling device in the present embodiment includes a lock pin 63 for coupling the rocker arm 55a and the rocker arm 55b so as to integrally rock. The coupling device in the present embodiment includes a slider 62 which pushes against the lock pin 63 and a return spring 64 which biases the lock pin 63 and slider 62.

The rocker arm 55a is formed with a hole part 65a. The rocker arm 55b is formed with a hole part 65b. The hole parts 65a, 65b are formed at the surfaces of the rocker arms 55a, 55b facing each other. The hole parts 65a, 65b are formed so that the lock pin 63 and slider 62 can move inside. The hole parts 65a, 65b are formed to correspond to the outer shapes of the lock pin 63 and slider 62.

The hole part 65a and hole part 65b are formed so as to communicate with each other when the rocker arms 55a, 55b are arranged at predetermined rocking positions. The hole parts 65a, 65b in the present embodiment are formed so as to match in position and communicate with each other when the rocker arm 55a abuts against the circular part 61a of the intake cam 52a and further the rocker arm 55b abuts against the circular part 61a of the intake cam 52b.

The slider 62, lock pin 63, and return spring 64 are arranged inside of the hole parts 65a, 65b. The return spring 64 pushes the lock pin 63 toward the inlet of the oil path 63 through the slider 62.

Inside of the rocker shaft 60 and rocker arm 55a, an oil path 67 is formed. The valve drive system of the present embodiment is provided with a working oil feed device which feeds a working oil to the oil path 67. The working oil feed device is formed so as to be able to feed pressured working oil. The oil path 67 is formed passing though the inside of the rocker shaft 60 and rocker arm 55a and feeding working oil to the hole part 65a. The working oil feed device in the present embodiment includes an oil pressure control valve 68 which is connected to the oil path 67. The oil pressure control valve 68 is formed to be able to adjust the pressure of the working oil which is fed to the hole part 65a. The working oil feed device in the present embodiment is controlled by the electronic control unit 30 (see FIG. 1).

FIG. 18 shows the state when due to control of the oil pressure control valve 68, the pressure of the working oil which is fed to the hole part 65a is low. In this state, the lock pin 63, as shown by the arrow 113, is pushed against by the elastic force of the return spring 64. The interface between the slider 62 and the lock pin 63 matches with the gap which is formed between the rocker arm 55a and the rocker arm 55b. The rocker arm 55a and the rocker arm 55b are not coupled with each other in this state. For this reason, the rocker arm 55a and the rocker arm 55b can rock independently without affecting each other.

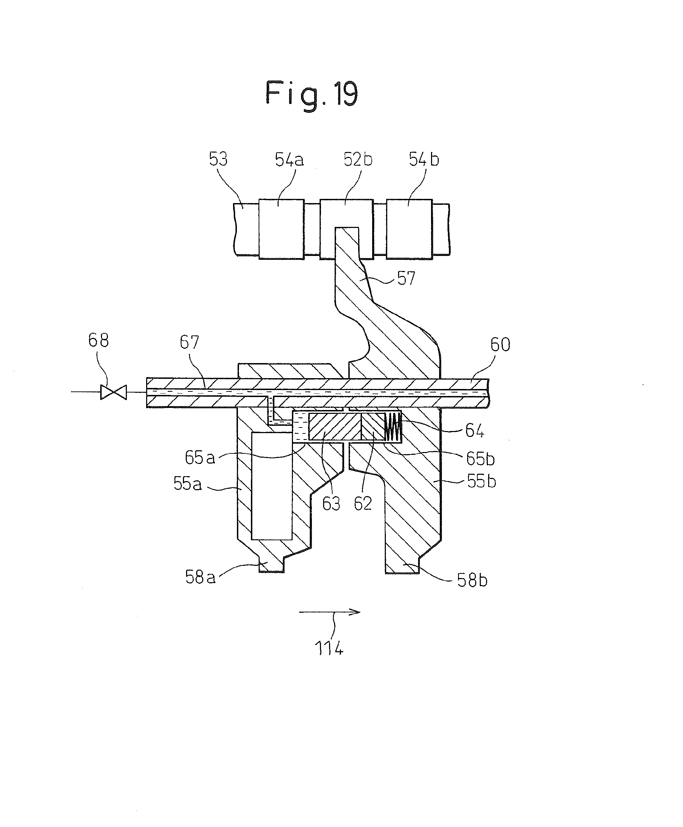

FIG. 19 shows a second schematic cross-sectional view when cutting a rocker arm and a rocker shaft for making the rocker arm rock. By opening the oil pressure control valve 68, it is possible to feed high pressure working oil through the oil path 67 to the hole part 65a. The biasing force due to the pressure of the working oil which is fed to the hole part 65a becomes larger than the biasing force due to the return spring 64, so the slider 62 and lock pin 63 move toward the inside of the hole part 65b. At the clearance part between the rocker arm 55a and the rocker arm 55b, the lock pin 63 is arranged. The rocker arm 55a and the rocker arm 55b are coupled with each other. The rocker arm 55a and the rocker arm 55b rock together.

In this way, the valve drive system of the present embodiment can drive the rocker arm 55a and the rocker arm 55b independently from each other or drive them together. By raising the pressure of the working oil which is fed to the coupling device and making the rocker arm 55a and rocker arm 55b integrated, the system becomes similar to the valve drive system which is provided with one rocker arm in the Embodiment 1 and a similar function can be exhibited.

Referring to FIG. 18, the valve drive system of the present embodiment can lower the pressure of the working oil which is fed to the coupling device so as to make the rocker arm 55a and the rocker arm 55b independently rock. In the operating state where the load of the internal combustion engine is small, sometimes the fuel is not stably burned in the combustion chamber 5. For example, when the air-fuel mixture which is fed to the inside of the combustion chamber 5 is small, sometimes the fuel does not stably burn. In such a case, control is performed to independently drive the rocker arm 55a and rocker arm 55b of the valve drive system. Furthermore, control is performed which offsets the operating timing of the intake valve 7a and the operating timing of the intake valve 7b from each other by the variable valve timing device.

Referring to FIG. 16 and FIG. 18, by separating the rocker arm 55a and the rocker arm 55b, the first intake valve constituted as the intake valve 7a is operated by the action of the first intake cam constituted by the intake cam 52a, while the second intake valve constituted as the intake valve 7b is operated by the action of the second intake cam constituted as the intake cam 52b.

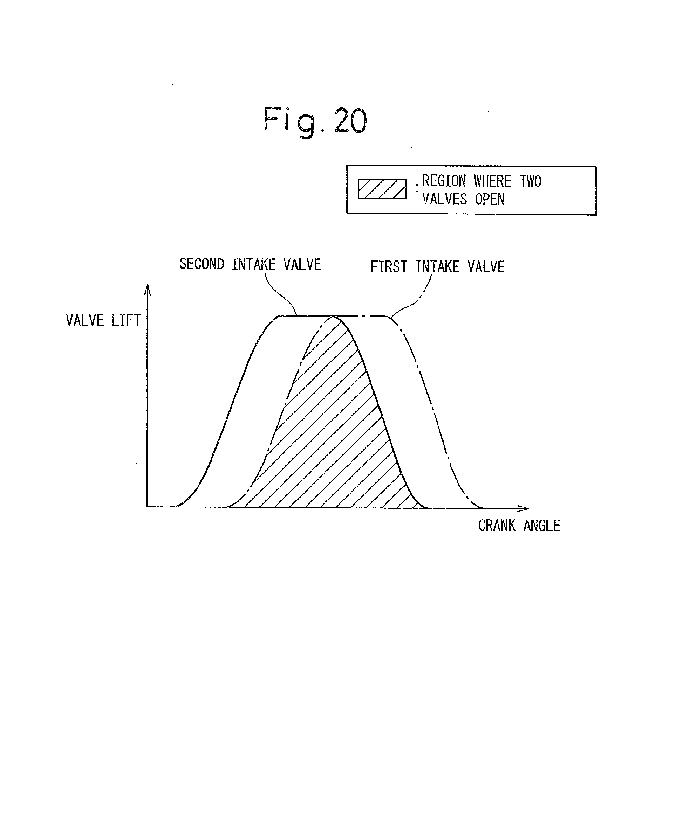

FIG. 20 shows a graph of the valve lift of the intake valves in operational control in the present embodiment. FIG. 20 shows a graph of the lift of the intake valves when operating in a state with the two rocker arms 55a, 55b separated and the operating timings of the two intake valves shifted from each other. The valve lift of the second intake valve constituted by the intake valve 7b is shown by the straight line, while the valve lift of the first intake valve constituted by the intake valve 7a is shown by the one-dot chain line. In the operational control which is shown in FIG. 20, the phase difference of the intake cam 52b and the intake cam 52a is made maximum. That is, the amount of offset of the operating timings of the intake valves is made maximum. The valve drive system of the present embodiment is formed so that even if the amount of offset is made the maximum, the period where the second intake valve is opened by the concentric circular part of the second intake cam and period where the first intake valve is opened by the concentric circular part of the first intake cam overlap with each other.

Due to the action of the second intake cam constituted by the intake cam 52b, the second intake valve constituted by the intake valve 7b starts to be driven. After this, due to the action of the first intake cam constituted by the intake cam 52a, the first intake valve constituted by the intake valve 7a is driven. In the present embodiment, one valve opens, then the other valve opens, so it is possible to form a flow of air-fuel mixture in the circumferential direction of the combustion chamber. That is, it is possible to form a swirl flow. For this reason, the air-fuel mixture can be sufficiently mixed inside of the combustion chamber. Even when the air or air-fuel mixture which flows into the combustion chamber is small, stable combustion is possible. Further, in the valve drive system of the present embodiment as well, a concentric circular part is formed at the bulging part of the intake cam, so it is possible to lengthen the period during which the two valves are open and possible to reduce the intake loss.

The coupling device in the present embodiment includes an oil path which feeds oil, a return spring, and a lock pin, but the invention is not limited to this. For the coupling device, any configuration may be employed so long as integrally coupling and separating a plurality of rocker arms.

The rest of the configuration, action, and effects are similar to those of the Embodiment 1, so the explanations will not be repeated here.

The above embodiments may be suitably combined. In the above figures, the same or corresponding parts are assigned the same reference signs. Note that, the above embodiments are illustrative and do not limit the invention. The embodiments include changes within the scope of the claims.

### Reference Signs List

- 1: engine body
- 5: combustion chamber
- 6: spark plug
- 7a, 7b: valve
- 17: throttle valve
- 18: intake air detector
- 30: electronic control unit
- 40: accelerator pedal
- 41: load sensor
- 42: crank angle sensor
- 51: intake cam shaft
- 52a, 52b: intake cam
- 55, 55a, 55b: rocker arm
- 57: extension part
- 58a, 58b: pushing part
- 60: rocker shaft
- 61a: circular part
- 61b: cam nose
- 61c: concentric circular part
- 62: slider
- 63: lock pin
- 64: return spring
- 67: oil path
- 70: variable valve timing device

## Claims

1. A valve drive system of an internal combustion engine which can increase an expansion ratio when fuel burns and a piston is pushed compared with an actual compression ratio when an air-fuel mixture which contains fuel is compressed by a piston, the valve drive system of the internal combustion engine provided with
a first intake cam and a second intake cam which operate intake valves and
a variable valve timing device which changes at least one operating timing of an operating timing of intake valves by the first intake cam and an operating timing of intake valves by the second intake cam, wherein
the intake valve is formed to be operated by being driven by the first intake cam and the second intake cam,
the variable valve timing device is formed so as to be able to offset the operating timing of the intake valves by the first intake cam and the operating timing of the intake valves by the second intake cam,
the first intake cam and the second intake cam include circular parts of substantially circular cross-sectional shapes and bulging parts which project from the circular parts and which drive the intake valves,
at least one of the bulging part of the first intake cam and the bulging part of the second intake cam has a concentric circular part which is formed in a concentric circular shape with the circular part, and
the concentric circular part holds an amount of movement of the intake valve substantially constant in a period during which the intake valve is open.

2. A valve drive system of internal combustion engine as set forth in claim 1, wherein
the bulging part of the first intake cam and the bulging part of the second intake cam have concentric circular parts,
the first intake cam and the second intake cam are formed so that the amount of movement of the intake valve which is driven by the concentric circular part of the first intake cam and the amount of movement of the intake valve which is driven by the concentric circular part of the second intake cam become substantially the same,
when the operating timing of the intake valves by the first intake cam and the operating timing of the intake valves by the second intake cam are different from each other, a time period where the concentric circular part of the first intake cam opens the intake valve and a time period where the concentric circular part of the second intake cam opens the intake valve overlap each other.

3. A valve drive system of internal combustion engine as set forth in claim 1 or 2, further provided with an operating state detection device which detects an operating state of the internal combustion engine,
wherein
the system detects the operating state of the internal combustion engine and determines an amount of offset between the operating timing of the intake valves by the first intake cam and the operating timing of the intake valves by the second intake cam in accordance with the operating state of the internal combustion engine.

4. A valve drive system of internal combustion engine as set forth in claim 3 in which a first intake valve and second intake valve are arranged for each cylinder, the valve drive system of internal combustion engine further provided with
a first transmission member which is interposed between the first intake cam and the first intake valve and transmits drive force of the first intake cam to the first intake valve,
a second transmission member which is interposed between the second intake cam and the second intake valve and transmits drive force of the second intake cam to the second intake valve, and
a coupling device for coupling and separating the first transmission member and the second transmission member, wherein
the system couples or separates the first transmission member and the second transmission member in accordance with the operating state of the internal combustion engine.
